# EUROPEAN PATENT SPECIFICATION

(11) **EP 3 148 122 B1**
(45) Date of publication and mention of the grant of the patent: **14.07.2021**
(21) Application number: 16162080.2
(22) Date of filing: 23.03.2016
(51) Int. Cl.: H04L 12/58

(54) **COMMUNICATION MESSAGE PROCESSING METHOD AND DEVICE, COMPUTER PROGRAM AND RECORDING MEDIUM**
KOMMUNIKATIONSNACHRICHTENVERARBEITUNGSVERFAHREN UND -VORRICHTUNG, COMPUTERPROGRAMM UND AUFZEICHNUNGSMEDIUM
PROCÉDÉ DE TRAITEMENT DE MESSAGES DE COMMUNICATION ET DISPOSITIF, PROGRAMME INFORMATIQUE ET SUPPORT D'ENREGISTREMENT

(30) Priority: 28.09.2015 CN 201510626605
(43) Date of publication of application: 29.03.2017
(73) Proprietor: Xiaomi Inc., Beijing 100085 (CN)
(72) Inventor: CUI, Yongbiao, 100085 BEIJING (CN); LIU, Huayijun, 100085 BEIJING (CN); CHEN, Tao, 100085 BEIJING (CN)
(74) Representative: Cabinet Beau de Loménie

(56) References cited:
- US-A1- 2014 004 889
- US-A1- 2014 194 064
- None

## Description

### TECHNICAL FIELD

The present disclosure generally relates to the field of computer technologies, and more particularly, relates to a communication message processing method and device, a computer program and a recording medium.

### BACKGROUND

With the development of computer technologies, mobile terminals are playing an increasingly important role in the daily life and business activities since the number of functions of mobile terminals is on the increase. However, sometimes if a user forgets to bring a mobile terminal, replying to an instant communication message or a call received by the mobile terminal cannot be realized until the user gets the mobile terminal back.

In a process of implementation of the present disclosure, the inventors have found that there are at least the following problems in the prior art:
when a user forgets to bring a mobile terminal, replying to a communication message cannot be realized until the user gets the mobile terminal back, so that a sender of the communication message cannot receive a timely reply to know related conditions of a receiver of the communication message, resulting in poor information acquisition timeliness.

Document US2014/004889 discloses a known communication message processing method.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

To overcome the above problems in the related arts, the present invention provides a communication message processing method, a computer program and a recording medium, as defined in appended independent claims 1, 7, 8 and 9. The technical solution is as follows.

According to a first aspect of the present disclosure, there is provided a communication message processing method, comprising:
acquiring a distance between a target terminal and a bound wearable device;
switching the target terminal to an auto-reply mode when the distance between the target terminal and the wearable device exceeds a preset distance threshold; and
controlling a first application program to send a preset reply message to a sender of a communication message when it is detected that the first application program receives the communication message in the auto-reply mode.

Controlling the first application program to send the preset reply message to the sender of the communication message when it is detected that the first application program receives the communication message in the auto-reply mode comprises:
determining a first reply message corresponding to a current first position information of the wearable device according to a pre-stored corresponding relation between position information and reply messages when it is detected that the first application program receives the communication message in the auto-reply mode; and
controlling the first application program to send the first reply message to the sender of the communication message.

Thus, a reply message corresponding to position information is timely sent to the sender of the communication message according to the position information of the wearable device to avoid a misunderstanding.

It should be noted that the bound wearable device is a device bound to the target terminal. Also, the first application program is executed on the target terminal.

According to an exemplary implementation, switching the target terminal to the auto-reply mode when the distance between the target terminal and the wearable device exceeds the preset distance threshold comprises:
switching the target terminal to the auto-reply mode when a duration, in which distances between the target terminal and the wearable device continually exceed the preset distance threshold, reaches a preset duration threshold.

Thus, it is determined that a user forgets to bring a mobile phone more accurately. According to an exemplary implementation, the method further comprises:
determining a usage scenario corresponding to a second position information according to position information of the wearable device within a preset historical duration;
determining a second reply message corresponding to the second position information according to the usage scenario corresponding to the second position information; and
correspondingly adding the second position information and the second reply message to the corresponding relation between the position information and the reply messages.

Thus, the position information and the corresponding reply message can be automatically added.

According to an exemplary implementation, controlling the first application program to send the preset reply message to the sender of the communication message when it is detected that the first application program receives the communication message in the auto-reply mode comprises:
determining a third reply message corresponding to a current time according to a pre-stored corresponding relation between time and reply messages when it is detected that the first application program receives the communication message in the auto-reply mode; and
controlling the first application program to send the third reply message to the sender of the communication message.

Thus, a reply message corresponding to time information is timely sent to the sender of the communication message according to the time information to avoid a misunderstanding.

According to an exemplary implementation, controlling the first application program to send the preset reply message to the sender of the communication message when it is detected that the first application program receives the communication message in the auto-reply mode comprises:
determining a current time usage scenario of a user according to a calendar stored in the target terminal when it is detected that the first application program receives the communication message in the auto-reply mode;
determining a fourth reply message corresponding to the usage scenario of the user according to a pre-stored corresponding relation between usage scenarii and reply messages; and
controlling the first application program to send the fourth reply message to the sender of the communication message.

Thus, a corresponding reply message is timely sent to the sender of the communication message according to a travel plan of a user to avoid a misunderstanding.

According to an exemplary implementation, the method further comprises: switching the target terminal to the auto-reply mode when a message, which is sent by the wearable device and shows that a user is in a sleep state, is received.

Thus, a corresponding reply message may be sent to the sender of the communication message although the user is in the sleep state to avoid a misunderstanding.

According to a second aspect of the present disclosure, there is provided a communication message processing device, comprising:
an acquiring module configured to acquire a distance between a target terminal and a bound wearable device;
a switching module configured to switch the target terminal to an auto-reply mode when the distance between the target terminal and the wearable device exceeds a preset distance threshold; and
a sending module configured to control a first application program to send a preset reply message to a sender of a communication message when it is detected that the first application program receives the communication message in the auto-reply mode.

The sending module comprises a first determining sub-module and a first sending sub-module, wherein
the first determining sub-module is configured to determine a first reply message corresponding to a current first position information of the wearable device according to a pre-stored corresponding relation between position information and reply messages when it is detected that the first application program receives the communication message in the auto-reply mode; and
the first sending sub-module is configured to control the first application program to send the first reply message to the sender of the communication message.

According to an exemplary implementation, the switching module is configured to: switch the target terminal to the auto-reply mode when a duration, in which distances between the target terminal and the wearable device continually exceed the preset distance threshold, reaches a preset duration threshold.

Alternatively, the device further comprises a first determining module, a second determining module and an adding module, wherein
the first determining module is configured to determine a usage scenario corresponding to a second position information according to position information of the wearable device within a preset historical duration;
the second determining module is configured to determine a second reply message corresponding to the second position information according to the usage scenario corresponding to the second position information; and
the adding module is configured to correspondingly add the second position information and the second reply message to the corresponding relation between the position information and the reply messages.

According to an exemplary implementation, the sending module comprises a second determining sub-module and a second sending sub-module, wherein
the second determining sub-module is configured to determine a third reply message corresponding to a current time according to a pre-stored corresponding relation between time and reply messages when it is detected that the first application program receives the communication message in the auto-reply mode; and
the second sending sub-module is configured to control the first application program to send the third reply message to the sender of the communication message.

According to an exemplary embodiment, the sending module comprises a third determining sub-module, a fourth determining sub-module and a third sending sub-module, wherein
the third determining sub-module is configured to determine a current time usage scenario of a user according to a calendar stored in the target terminal when it is detected that the first application program receives the communication message in the auto-reply mode;
a fourth determining sub-module is configured to determine a fourth reply message corresponding to the usage scenario of the user according to a pre-stored corresponding relation between usage scenarii and reply messages; and
the third sending sub-module is configured to control the first application program to send the fourth reply message to the sender of the communication message.

According to an exemplary implementation, the switching module is further configured to: switch the target terminal to the auto-reply mode when a message, which is sent by the wearable device and shows that a user is in a sleep state, is received.

According to a third aspect of the present disclosure, there is provided a communication message processing device, comprising:
a processor; and
a memory configured to store an instruction executable by the processor,
wherein the processor is configured to:
   acquire a distance between a target terminal and a bound wearable device;
   switch the target terminal to an auto-reply mode when the distance between the target terminal and the wearable device exceeds a preset distance threshold; and
   control a first application program to send a preset reply message to a sender of a communication message when it is detected that the first application program receives the communication message in the auto-reply mode.

In one particular embodiment, the steps of the communication message processing method are determined by computer program instructions.

Consequently, according to a fourth aspect, the invention is also directed to a computer program for executing the steps of a communication message processing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the invention as claimed have the following advantageous effects:
In the invention, the distance between the target terminal and the bound wearable device is acquired; when the distance between the target terminal and the wearable device exceeds the preset distance threshold, the target terminal is switched to the auto-reply mode; and the first application program is controlled to send the preset reply message to the sender of the communication message when it is detected that the first application program receives the communication message in the auto-reply mode. Therefore, timely replying to the communication message can be realized when an application program in the target terminal receives the communication message, thereby improving information acquisition timeliness.

In the embodiments of this disclosure, it should be understood that both the foregoing general description and the following detailed description are only exemplary and explanatory and are not restrictive of the invention, which is defined by the appended independent claims, with further advantageous features included in the dependent claims.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure. In the drawings:
Fig. 1 is a flow chart showing a communication message processing method according to an exemplary embodiment.
Fig. 2 is a schematic diagram showing operation of a communication message processing interface according to an exemplary embodiment.
Fig. 3a is a schematic diagram illustrating an application scenario according to an exemplary embodiment.
Fig. 3b is a schematic diagram illustrating an application scenario according to an exemplary embodiment.
Fig. 3c is a schematic diagram illustrating an application scenario according to an exemplary embodiment.
Fig. 3d is a schematic diagram illustrating an application scenario according to an exemplary embodiment.
Fig. 4a is a schematic diagram illustrating an application scenario according to an exemplary embodiment.
Fig. 4b is a schematic diagram illustrating an application scenario according to an exemplary embodiment.
Fig. 4c is a schematic diagram illustrating an application scenario according to an exemplary embodiment.
Fig. 5 is a structure diagram of a communication message processing device according to an exemplary embodiment.
Fig. 6 is a structure diagram of a communication message processing device according to an exemplary embodiment.
Fig. 7 is a structure diagram of a communication message processing device according to an exemplary embodiment.
Fig. 8 is a structure diagram of a communication message processing device according to an exemplary embodiment.
Fig. 9 is a structure diagram of a communication message processing device according to an exemplary embodiment.
Fig. 10 is a structure diagram of a target terminal according to an exemplary embodiment.

Through the above accompany drawings, the specific embodiments of the disclosure have been shown, for which a more detailed description will be given as below. These drawings and textual description are not intended to limit the scope of the concept of the disclosure in any manner, but to explain the concept of the disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

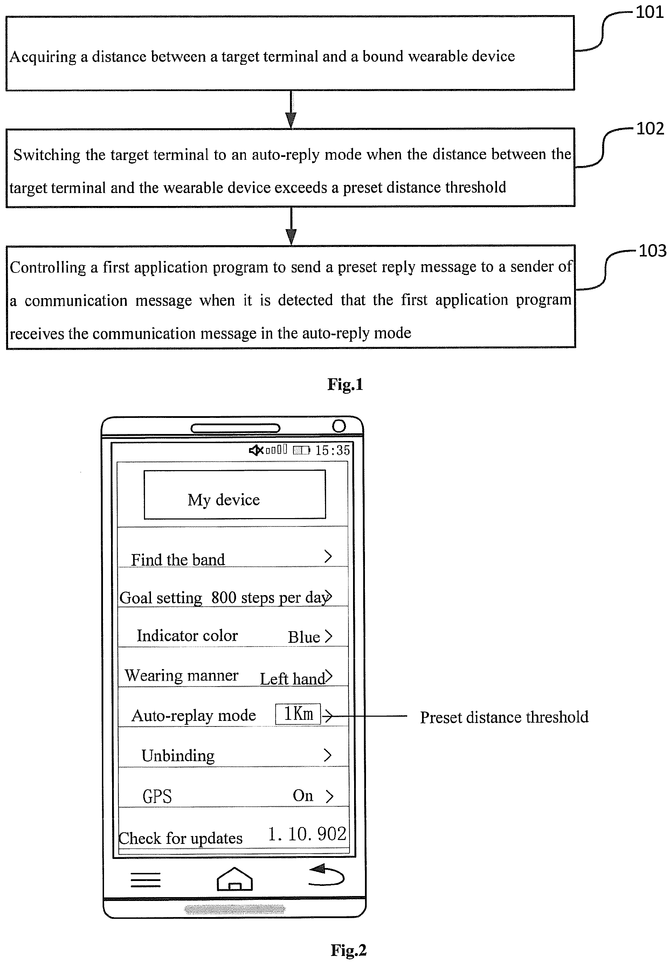

One exemplary embodiment of the disclosure provides a communication message processing method. As shown in Fig. 1, a processing flow of the method may comprise the following steps:
step 101, acquiring a distance between a target terminal and a bound wearable device;
step 102, switching the target terminal to an auto-reply mode when the distance between the target terminal and the wearable device exceeds a preset distance threshold; and
step 103, controlling a first application program to send a preset reply message to a sender of a communication message when it is detected that the first application program receives the communication message in the auto-reply mode.

In the embodiments of this disclosure, the distance between the target terminal and the bound wearable device is acquired; when the distance between the target terminal and the wearable device exceeds the preset distance threshold, the target terminal is switched to the auto-reply mode; and the first application program is controlled to send the preset reply message to the sender of the communication message when it is detected that the first application program receives the communication message in the auto-reply mode. Therefore, timely replying to the communication message can be realized when an application program in the target terminal receives the communication message, thereby improving information acquisition timeliness.

Another exemplary embodiment of the disclosure provides a communication message processing method used to a terminal (namely, a target terminal) which may be a mobile terminal, such as a mobile phone, a tablet computer, or the like. The target terminal may be installed with an application program managing a wearable device, called a management application program for short, and the wearable device may be a smart band, a smart pen, a smart pendant, or the like. The terminal may include a communication component and a positioning component; the communication component is configured to process data transmission of a communication message; and the positioning component is configured to detect position information thereof, and may be a GPS (Global Positioning System) component, or the like. The terminal can be further equipped with a processor, a memory, a transceiver and the like. The processor may be configured to process a communication message procedure, and the memory is configured to store required data and generated data in a procedure of storage processing. The terminal can be further provided with an input/output device such as a screen, etc., and the screen is configured to display an operation interface of the terminal, and the like, and may be a touch control screen. The wearable device may comprise a positioning component configured to detect position information thereof and may further comprise a communication component configured to interact with the target terminal, the communication component may be a Bluetooth component, a WIFI (Wireless-Fidelity) component, or the like, and the wearable device may further include a processor, a memory and other components. In the embodiment, an example in which a mobile phone serves as the terminal and a band serves as the wearable device is taken to illustrate the solution in detail and other situations similar to that will not be elaborated in the embodiment.

The processing flow as shown in Fig. 1 will be described in detail with reference to the embodiments, and may comprise steps as follows.

Step 101, acquiring a distance between a target terminal and a bound wearable device.

In practice, a user can carry the wearable device set to be bound with the target terminal in a management application program, after the user binds the target terminal with the wearable device, an auto-reply function in the application program can be enabled, the enabled auto-reply function may trigger the target terminal to send a distance query request to a server (which may be a backend server of the application program), and the server can acquire position information of the target terminal and the wearable device bound therewith according to a preset period (such as 1 minute) after receiving the distance query request, so that the distance therebetween is calculated and a calculation result is sent to the target terminal.

Step 102, switching the target terminal to the auto-reply mode when the distance between the target terminal and the wearable device exceeds a preset distance threshold,
wherein the auto-reply mode may be one profile of the target terminal, in the profile, automatic replying to messages such as a short message, an incoming call request, a social application program message and the like received by the target terminal can be realized, and the preset distance threshold can be set in the management application program by the user according to his/her actual needs, such as 1 kilometer, or 5 kilometers, as shown in Fig. 2.

In practice, after the target terminal receives an information of the distance between the target terminal and the wearable device, the management application program can determine whether the distance is greater than the preset distance threshold, if yes, it is determined that the user has forgotten to bring the target terminal, and a local profile can be switched to the auto-reply mode at the moment.

Alternatively, whether the user forgets to bring a mobile phone can be determined based on a period during which distances between the mobile phone and the wearable device exceed the preset distance threshold. Correspondingly, the processing flow of the step 102 is as follows: switching the target terminal to the auto-reply mode when a duration, in which the distances between the target terminal and the wearable device continually exceed the preset distance threshold, reaches the preset duration threshold.

The preset duration threshold can be set in the management application program by the user according to his/her actual needs, or can be preset in the management application program by a technical person, such as 5 minutes, 30 minutes, or the like.

In practice, after the target terminal receives the information of distances between the target terminal and the wearable device periodically sent by the server, the management application program can compare each of the received distances with the preset distance threshold, if all of the distances received in a specified duration (namely, the preset duration threshold) are greater than the preset distance threshold, it is determined that the user has forgotten to bring the target terminal, and a local profile can be switched to the auto-reply mode at the moment.

Step 103, controlling a first application program to send a preset reply message to a sender of a communication message when it is detected that the first application program receives the communication message in the auto-reply mode.

The communication message may be a short message, an incoming call request, or the like. The reply message is one of related messages configured to illustrate that the user forgets to bring the terminal, can be set in the management application by the user, or may be set in the management application by the technical person.

In practice, if the current profile of the terminal is an auto-reply mode, the management application program can monitor communication message receiving events of application programs (such as a short message application program, a telephone application program, an instant messaging application program, etc.) with a communication function in the terminal. When detecting that a first application program receives a communication message, the management application program can control the first application program to send a reply message to a sender of the communication message through a pre-stored interface provided by the first application program. For example, when detecting that a Wechat application program receives a communication message sent by a contact account, the management application program can control the Wechat application program to send "The subscriber forgot to bring a mobile phone, please contact later" to the contact account. Merely a uniform reply message can be set in the management application program, or different reply messages can be set according to current position information of the wearable device or current time. In addition, words of "[Automatic reply]" can be added at the front or the end of each reply message to indicate that the message is not sent by the user manually.

Alternatively, it also can be set to send reply messages based on position information. The process in step 103 is as follows: determining a first reply message corresponding to a current first position information of the wearable device according to a pre-stored corresponding relation between position information and reply messages when it is detected that a first application program receives a communication message in the auto-reply mode, and controlling the first application program to send the first reply message to a sender of the commutation message.

In practice, as shown in table 1, the management application program can be provided with a table of the corresponding relation between the position information and the reply messages. The position information may comprise place names input by clicking on a map of a user, and corresponding reply messages can be edited by the user, or may be selected by the user from reply messages preset by a technical person. In the corresponding relation table, the user can add his/her common position information and corresponding reply messages, for example, if the name of a work place is "Zhongguan Building", a corresponding reply message can be "The subscriber is at work, forgetting to bring the mobile phone, please contact later" or "The subscriber is at work, forgetting to bring the mobile phone, please dial ××××××"; a corresponding reply message for "XX cinema" can be "The subscriber is in the cinema, please contact later"; and a corresponding reply message for "XX supermarket" can be "The subscriber is in the supermarket, please contact later", etc. If the profile of the terminal is the auto-reply mode, when the management application program detects that the first application program receives a communication message, a position name in current position information of the wearable device can be acquired, then finding a position name matched with the current position name of the wearable device in the corresponding relation table is performed to determine a reply message corresponding to the position name, and then the first application program is controlled to send the found reply message to a sender of the communication message through a pre-stored interface provided by the first application program.

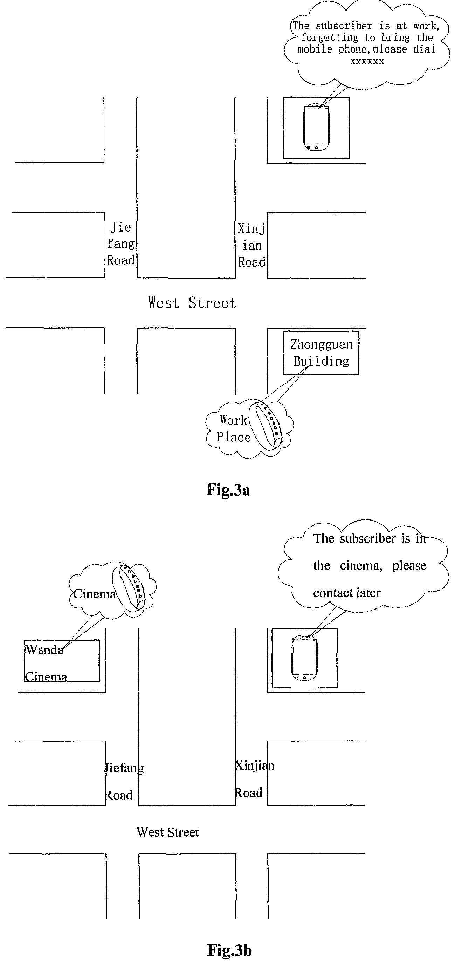

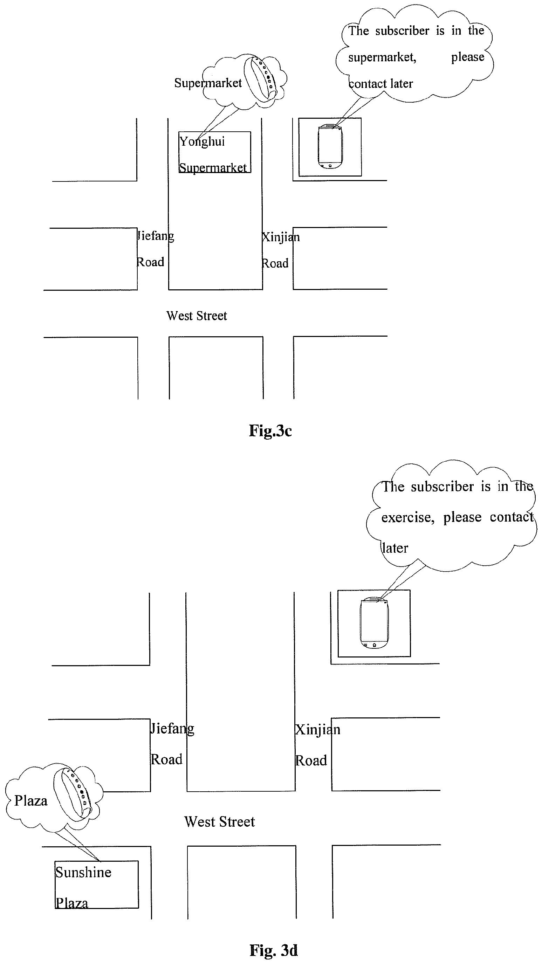

For example, as shown in Fig. 3a, when "Zhongguan Building" as a position name of the wearable device is acquired, the terminal may control the first application program to send a reply message "The subscriber forgot to bring the mobile phone, please contact later" to the sender of the communication message. As shown in Fig. 3b, when "Wanda Cinema" as a position name of the wearable device is acquired, the terminal may control the first application program to send a reply message "The subscriber is in the cinema, please contact later" to the sender of the communication message. As shown in Fig. 3c, when "Yonghui Supermarket" as a position name of the wearable device is acquired, the terminal may control the first application program to send a reply message "The subscriber is in the supermarket, please contact later" to the sender of the communication message. As shown in Fig. 3d, when "Sunshine Plaza" as a position name of the wearable device is acquired, the terminal may control the first application program to send a reply message "The subscriber is in the exercise, please contact later" to the sender of the communication message.

In addition, after the terminal acquires a current position name of the wearable device, if the position name cannot be found from the table of the corresponding relation between the position information and the reply messages, a position nearest to the current position can be acquired from the corresponding relation table, then whether the distance between the two positions is smaller than a certain threshold, such as 100 meters, is determined; if the distance is smaller than the certain threshold, a reply message corresponding to the position nearest to the current position can be acquired, and the first application program is controlled to send the reply message to the sender of the communication message; and if the distance is larger than the certain threshold, a default reply message, such as "The subscriber forgot to bring the mobile phone, please contact later" can be acquired, and then the first application program is controlled to send the default reply message to the sender of the communication message.

**Table 1**

| Position information | Cinema | Zhongguan Building | Supermarket | ...... |
|---|---|---|---|---|
| Reply messages | The subscriber is in the cinema, please contact later | The subscriber is at work, forgetting to bring the mobile phone, please contact later | The subscriber is in the supermarket, please contact later | ...... |

Alternatively, position information and corresponding reply messages can be determined according to variation law statistics for the user's position information, and the corresponding processing flow may comprise: determining a usage scenario corresponding to a second position information according to the position information of the wearable device within the preset historical duration, determining a second reply message corresponding to the second position information according to the usage scenario corresponding to the second position information, and correspondingly adding the second position information and the second reply message to the corresponding relation between the position information and the reply messages.

In practice, the preset history duration may be 1 year, 1 month, or the like. The corresponding relation between usage scenarii and reply messages may be pre-stored in the management application program, and the usage scenario can be set as working, running, supermarket shopping, or the like. The user can be provided with a work and rest time setting page, on which periods, such as a working period, a running period, a supermarket shopping period and the like, corresponding to all usage scenarii are included, by the management application program, and may set his/her work and rest time, for instance, the working period from Monday to Friday is set between 8: 00 to 18: 00, the running period is set from 20: 00 to 21: 00 every day, the supermarket shopping period is set from 8: 00 to 10: 00 every Sunday, and so on. During the process that the user uses the wearable device, the target terminal can acquire position information of the wearable device at any period set above, and the position information of which a repeat occurrence number is larger than a preset ratio threshold (eg. 60%) is set as position information (namely, the second position information) of a usage scenario corresponding to the period. Thus, a reply message (namely, the second reply message) corresponding to the second position information can be determined according to the corresponding relation between the usage scenarii and the reply messages, and then the second position information and the second reply message are correspondingly added to the corresponding relation between the position information and the reply message.

Alternatively, a reply message can be sent according to a pre-stored corresponding relation between time and reply messages. The processing flow in step 103 is as follows: determining a third reply message corresponding to a current time according to the pre-stored corresponding relation between the time and the reply messages when it is detected that a first application program receives a communication message in the auto-reply mode, and controlling the first application program to send the third reply message to a sender of the commutation message.

In practice, as shown in table 2, the management application program can be provided with a table of a corresponding relation between the time and the reply messages. The corresponding relation table may comprise reply messages corresponding to different periods, and the user can add reply messages (third reply messages) corresponding to all periods in the corresponding relation table. For example, the user can add a reply message "The subscriber is at work, forgetting to bring the mobile phone, please contact later" corresponding to a period between 9: 00 to 18: 00 from Monday to Friday, a reply message "The subscriber is running, forgetting to bring the mobile phone, please contact later" corresponding to a period from 20: 00 to 21: 00 every day, a reply message "The subscriber is sleeping" corresponding to a period from 22: 00 at night to 7: 00 next morning, and the like, into the corresponding relation table.

**Table 2**

| Periods | 9:00-18:00 | 20:00-21:00 | 22:00-7:00 | ...... |
|---|---|---|---|---|
| Reply messages | The subscriber is at work, forgetting to bring the mobile phone, please contact later | The subscriber is running, forgetting to bring the mobile phone, please contact later | The subscriber is sleeping | ...... |

If the profile of the terminal is an auto-reply mode, when the terminal detects that a first application program receives a communication message, a communication message receiving time can be acquired, and then finding a period containing the communication message receiving time in the table of the corresponding relation between the time and the reply messages is performed to acquire a reply message corresponding to the period, and finally the first application program is controlled to send the acquired reply message to a sender of the communication message through a pre-stored interface provided by the first application program.

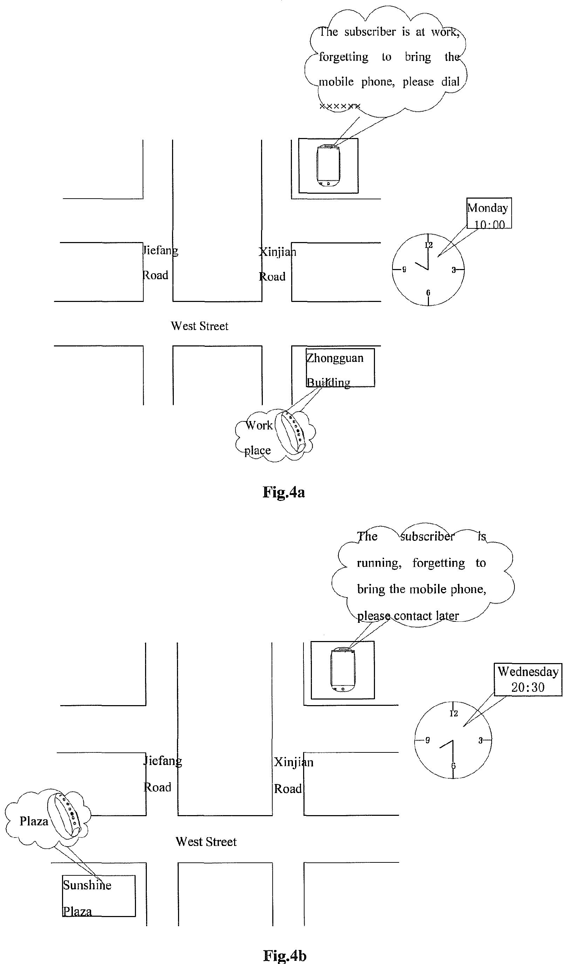

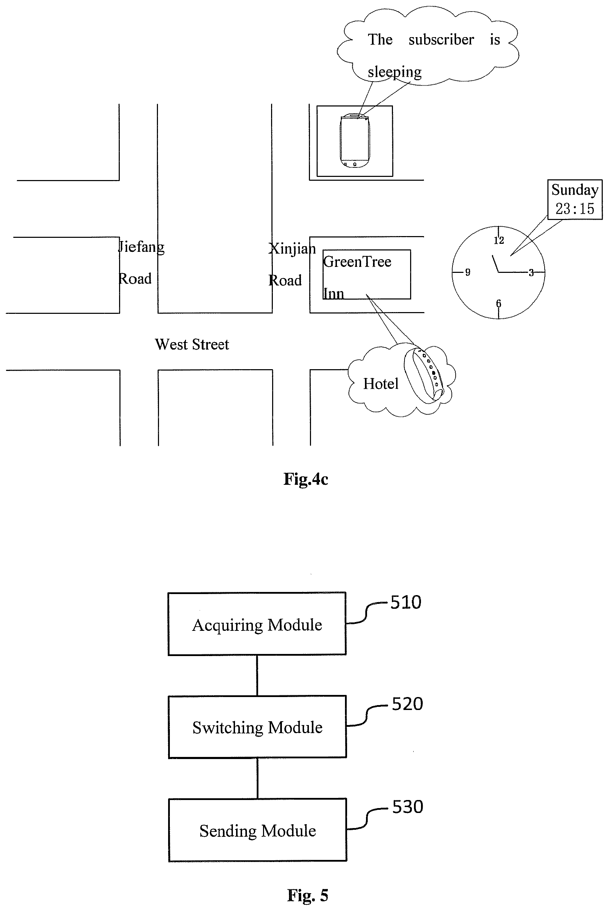

For example, as shown in Fig. 4a, if a communication message receiving time acquired by the terminal is 10:00 am, the first application program is controlled to send "The subscriber is at work, forgetting to bring the mobile phone, please contact later" to a sender of the communication message. As shown in Fig. 4b, if a communication message receiving time acquired by the terminal is 20:30, the first application program is controlled to send "The subscriber is running, forgetting to bring the mobile phone, please contact later" to a sender of the communication message. As shown in Fig. 4c, if a communication message receiving time acquired by the terminal is 23:15, the first application program is controlled to send "The subscriber is sleeping" to a sender of the communication message.

Alternatively, a reply message can be sent automatically according to the calendar stored in the terminal. The processing flow in step 103 is as follows: determining current event information corresponding to a current time according to the calendar stored in the terminal when it is detected that a first application program receives a communication message in the auto-reply mode, determining a fourth reply message corresponding to the current event information according to the pre-stored corresponding relation between event information and the reply messages, and controlling the first application program to send the fourth reply message to a sender of the commutation message.

In practice, the user can set his/her calendar, also known as a schedule, in a routine arrangement application program in the terminal, and the user's daily event information, including event's content, time and position, can be set in the calendar. As shown in table 3, a table of the corresponding relation between the event information and the reply messages can be set in the management application program. The corresponding relation table may comprise reply messages corresponding to different events, and the user can add reply messages (fourth reply messages) corresponding to all events in the corresponding relation table. For instance, a reply message corresponding to event information of "at the meeting" is "The subscriber is at the meeting, please contact later" a reply message corresponding to event information of "in the cinema" is "The subscriber is in the cinema, please contact later", and so on.

**Table 3**

| Event information | At the Meeting | In the Vegetable Market | In the Cinema | ...... |
|---|---|---|---|---|
| Reply messages | The subscriber is at the meeting, please contact later | The subscriber is in the vegetable market, please contact later | The subscriber is in the cinema, please contact later | ...... |

If the profile of the terminal is an auto-reply mode, when the terminal detects that a first application program receives a communication message, a calendar of the user and current time can be acquired, finding event information corresponding to the current time from the calendar is performed, then finding a reply message corresponding to the current event information in the table of the corresponding relation between the event information and the reply messages is carried out according to the current event information after the event information corresponding to the current time is found, and finally the first application program is controlled to send the found reply message to a sender of the communication message through a pre-stored interface provided by the first application program.

Moreover, after the calendar and current time are acquired, if there is no record of event information corresponding to the current time in the calendar, a default reply message, such as "The subscriber forgot to bring the mobile phone, please contact later" can be acquired. Or, after event information corresponding to the current time is acquired, if there is no record of the event information in the pre-stored corresponding relation between the event information and the reply messages, the default reply message, such as "The subscriber forgot to bring the mobile phone, please contact later" can be acquired.

Alternatively, when the user is in a sleep state, the terminal can also switch a current profile to the auto-reply mode, and the corresponding processing flow is as follows: after sleep state information of the user sent by the wearable device is received, the terminal is switched to the auto-reply mode.

The wearable device can use a gravity sensor to detect the user's sleep state, a sleep state of the user can be determined when it is detected that the user has no movement for 15 minutes, and then user's sleep state information is sent to the terminal; and after the terminal receives the user's sleep state information sent by the wearable device, the management application program determines that the user is already in the sleep state according to the user's sleep state information, so that the local profile can be switched to the auto-reply mode.

In the embodiments of this disclosure, the distance between the target terminal and the bound wearable device is acquired; when the distance between the target terminal and the wearable device exceeds the preset distance threshold, the target terminal is switched to the auto-reply mode; and the first application program is controlled to send the preset reply message to the sender of the communication message when it is detected that the first application program receives the communication message in the auto-reply mode. Therefore, timely replying to the communication message can be realized when an application program in the target terminal receives the communication message, thereby improving information acquisition timeliness.

Another exemplary embodiment of the disclosure provides a communication message processing device. As shown in Fig. 5, the device comprises:
an acquiring module 510 configured to acquire a distance between a target terminal and a bound wearable device;
a switching module 520 configured to switch the target terminal to an auto-reply mode when the distance between the target terminal and the wearable device exceeds a preset distance threshold; and
a sending module 530 configured to control a first application program to send a preset reply message to a sender of a communication message when it is detected that the first application program receives the communication message in the auto-reply mode.

Alternatively, the switching module 520 is configured to:
switch the target terminal to the auto-reply mode when a duration, in which distances between the target terminal and the wearable device continually exceed the preset distance threshold, reaches a preset duration threshold.

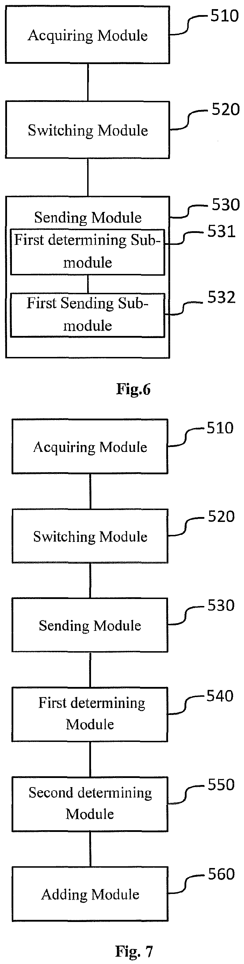

Alternatively, as show in Fig. 6, the sending module 530 comprises a first determining sub-module 531 and a first sending sub-module 532, wherein
the first determining sub-module 531 is configured to determine a first reply message corresponding to a current first position information of the wearable device according to a pre-stored corresponding relation between position information and reply messages when it is detected that the first application program receives the communication message in the auto-reply mode; and
the first sending sub-module 532 is configured to control the first application program to send the first reply message to the sender of the communication message.

Alternatively, as show in Fig. 7, the device further comprises a first determining module 540, a second determining module 550 and an adding module 560, wherein
the first determining module 540 is configured to determine a usage scenario corresponding to a second position information according to position information of the wearable device within a preset historical duration;
the second determining module 550 is configured to determine a second reply message corresponding to the second position information according to the usage scenario corresponding to the second position information; and
the adding module 560 is configured to correspondingly add the second position information and the second reply message to the corresponding relation between the position information and the reply messages.

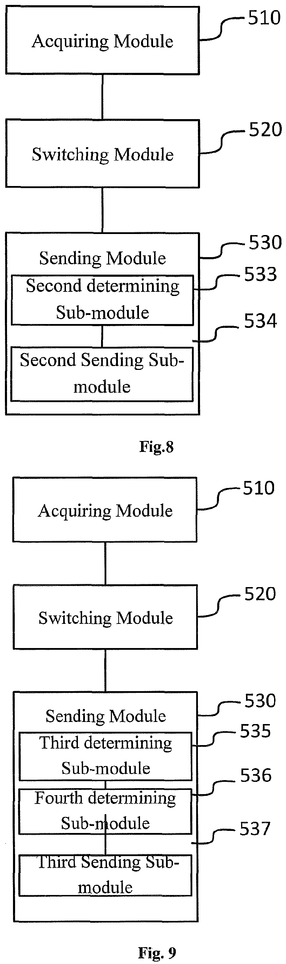

Alternatively, as show in Fig. 8, the sending module 530 comprises a second determining sub-module 533 and a second sending sub-module 534, wherein
the second determining sub-module 533 is configured to determine a third reply message corresponding to a current time according to a pre-stored corresponding relation between time and reply messages when it is detected that the first application program receives the communication message in the auto-reply mode; and
the second sending sub-module 534 is configured to control the first application program to send the third reply message to the sender of the communication message.

Alternatively, as show in Fig. 9, the sending module 530 comprises a third determining sub-module 535, a fourth determining sub-module 536 and a third sending sub-module 537, wherein
the third determining sub-module 535 is configured to determine a current time usage scenario of a user according to a calendar stored in the target terminal when it is detected that the first application program receives the communication message in the auto-reply mode;
a fourth determining sub-module 536 is configured to determine a fourth reply message corresponding to the usage scenario of the user according to a pre-stored corresponding relation between usage scenarii and reply messages; and
the third sending sub-module 537 is configured to control the first application program to send the fourth reply message to the sender of the communication message.

Alternatively, the switching module 520 is further configured to:
switch the target terminal to the auto-reply mode when a message, which is sent by the wearable device and shows the user is in a sleep state, is received.

In the embodiments of this disclosure, the distance between the target terminal and the bound wearable device is acquired; when the distance between the target terminal and the wearable device exceeds the preset distance threshold, the target terminal is switched to the auto-reply mode; and the first application program is controlled to send the preset reply message to the sender of the communication message when it is detected that the first application program receives the communication message in the auto-reply mode. Therefore, timely replying to the communication message can be realized when an application program in the target terminal receives the communication message, thereby improving information acquisition timeliness.

It should be noted that, the device for processing a communication message according to the above embodiments is only illustrated by example of divided functional modules as the above-mentioned. While in practice, the above functions may be assigned to different modules as desired, that is, the internal structure of the device may be divided into different functional modules, so as to attain all or part of the functions described above. In addition, the method and the device for processing a communication message according to the above-described embodiments belongs to the same conception, therefore, the detailed implementing processes of the device may refer to those of the embodiments of the method, and the detailed description of which are not given herein any more.

Another exemplary embodiment of the disclosure provides a structure diagram of a terminal. The terminal may be a mobile phone, a tablet computer, or the like.

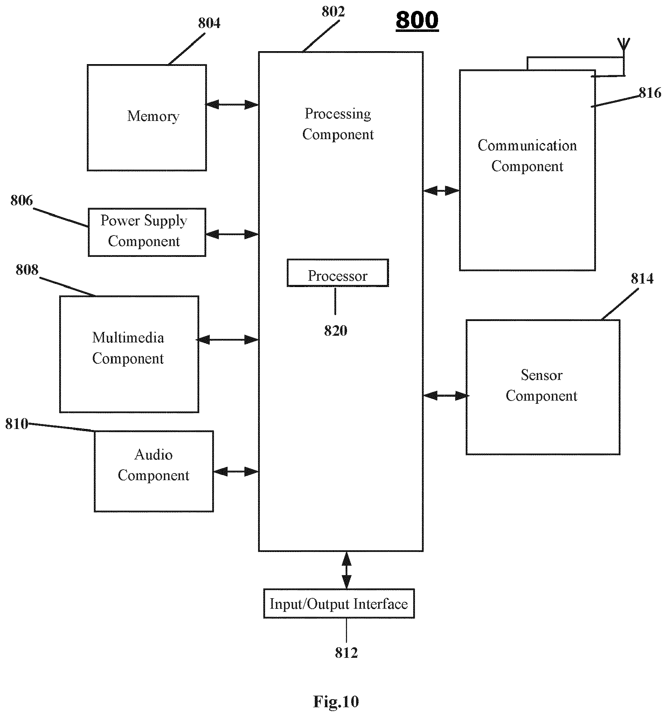

Referring to Fig. 10, the terminal 800 may include one or more following components: a processing component 802, a memory 804, a power supply component 806, a multimedia component 808, an audio component 810, an input/output (I/O) interface 812, a sensor component 814 and a communication component 816.

The processing component 802 typically controls overall operations of the terminal 800, such as the operations associated with display, telephone calls, data communications, camera operations and recording operations. The processing component 802 may include one or more processors 820 to execute instructions to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 806 provides power to various components of the terminal 800. The power supply component 806 may include a power supply management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front and rear cameras may be a fixed optical lens system or have a focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user's contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 804, executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

The terminal is enabled to execute the above-mentioned method when an instruction of the non-transitory computer-readable storage medium is executed by the processor of the terminal, and the method comprises:
acquiring a distance between a target terminal and a bound wearable device;
switching the target terminal to an auto-reply mode when the distance between the target terminal and the wearable device exceeds a preset distance threshold; and
controlling a first application program to send a preset reply message to a sender of a communication message when it is detected that the first application program receives the communication message in the auto-reply mode.

Alternatively, switching the target terminal to the auto-reply mode when the distance between the target terminal and the wearable device exceeds the preset distance threshold comprises:
switching the target terminal to the auto-reply mode when a duration, in which distances between the target terminal and the wearable device continually exceed the preset distance threshold, reaches a preset duration threshold.

Alternatively, controlling the first application program to send the preset reply message to the sender of the communication message when it is detected that the first application program receives the communication message in the auto-reply mode comprises:
determining a first reply message corresponding to a current first position information of the wearable device according to a pre-stored corresponding relation between position information and reply messages when it is detected that the first application program receives the communication message in the auto-reply mode; and
controlling the first application program to send the first reply message to the sender of the communication message.

Alternatively, the method further comprises:
determining a usage scenario corresponding to a second position information according to position information of the wearable device within a preset historical duration;
determining a second reply message corresponding to the second position information according to the usage scenario corresponding to the second position information; and
correspondingly adding the second position information and the second reply message to the corresponding relation between the position information and the reply messages.

Alternatively, controlling the first application program to send the preset reply message to the sender of the communication message when it is detected that the first application program receives the communication message in the auto-reply mode comprises:
determining a third reply message corresponding to a current time according to a pre-stored corresponding relation between time and reply messages when it is detected that the first application program receives the communication message in the auto-reply mode; and
controlling the first application program to send the third reply message to the sender of the communication message.

Alternatively, controlling the first application program to send the preset reply message to the sender of the communication message when it is detected that the first application program receives the communication message in the auto-reply mode comprises:
determining a current time usage scenario of a user according to a calendar stored in the target terminal when it is detected that the first application program receives the communication message in the auto-reply mode;
determining a fourth reply message corresponding to the usage scenario of the user according to a pre-stored corresponding relation between usage scenarii and reply messages; and
controlling the first application program to send the fourth reply message to the sender of the communication message.

Alternatively, the method further comprises:
switching the target terminal to the auto-reply mode when a message, which is sent by the wearable device and shows the user is in a sleep state, is received.

In the embodiments of this disclosure, the distance between the target terminal and the bound wearable device is acquired; when the distance between the target terminal and the wearable device exceeds the preset distance threshold, the target terminal is switched to the auto-reply mode; and the first application program is controlled to send the preset reply message to the sender of the communication message when it is detected that the first application program receives the communication message in the auto-reply mode. Therefore, timely replying to the communication message can be realized when an application program in the target terminal receives the communication message, thereby improving information acquisition timeliness.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A communication message processing method performed by a management application program of a terminal (800), comprising:
acquiring (101) a distance between the terminal and a wearable device, wherein the wearable device is carried by the terminal's user;
switching (102) the terminal to an auto-reply mode when the distance between the terminal and the wearable device exceeds a preset distance threshold; and
controlling (103) a first application program to send a preset reply message to a sender of a communication message received by the first application program when it is detected that the first application program receives the communication message in the auto-reply mode, **characterized in that** enabling an auto-reply mode triggers the terminal to send a distance query request to a server; and
the acquiring step comprises receiving periodically the information of distances between the terminal and the wearable device sent by the server.

2. The method of claim 1, **characterized in that** switching (102) the terminal to the auto-reply mode when the distance between the terminal and the wearable device exceeds the preset distance threshold comprises:
switching the terminal to the auto-reply mode when a duration, in which distances between the terminal and the wearable device continually exceed the preset distance threshold, reaches a preset duration threshold.

3. The method of claim 1, **characterized in that** the method further comprises:
determining a usage scenario corresponding to a second position information according to position information of the wearable device within a preset historical duration;
determining a second reply message corresponding to the second position information according to the usage scenario corresponding to the second position information; and
correspondingly adding the second position information and the second reply message to the corresponding relation between the position information and the reply messages.

4. The method of claim 1, **characterized in that** controlling (103) the first application program to send the preset reply message to the sender of the communication message when it is detected that the first application program receives the communication message in the auto-reply mode comprises:
determining a third reply message corresponding to a current time according to a pre-stored corresponding relation between time and reply messages when it is detected that the first application program receives the communication message in the auto-reply mode; and
controlling the first application program to send the third reply message to the sender of the communication message.

5. The method of claim 1, **characterized in that** controlling (103) the first application program to send the preset reply message to the sender of the communication message when it is detected that the first application program receives the communication message in the auto-reply mode comprises:
determining current event information corresponding to a current time according to a calendar stored in the terminal when it is detected that the first application program receives the communication message in the auto-reply mode;
determining a fourth reply message corresponding to the current event information according to a pre-stored corresponding relation between event information and reply messages; and
controlling the first application program to send the fourth reply message to the sender of the communication message.

6. The method of claim 1, **characterized in that** the method further comprises:
switching the terminal to the auto-reply mode when a message, which is sent by the wearable device and shows that a user is in a sleep state, is received.

7. A terminal enabled to execute the method as defined in any of claims 1 to 6.

8. A computer program including instructions for executing the steps of a communication message processing method according to any one of claims 1 to 6 when said program is executed by a computer.

9. A recording medium readable by a computer and having recorded thereon a computer program including instructions for executing the steps of a communication message processing method according to any one of claims 1 to 6.

## Patentansprüche

1. Verfahren zur Verarbeitung von Kommunikationsnachrichten, das durch ein Verwaltungsanwendungsprogramm eines Endgerätes (800) ausgeführt wird, umfassend:
Erfassen (101) einer Distanz zwischen dem Endgerät und einer am Körper tragbaren Vorrichtung, wobei die am Körper tragbare Vorrichtung von dem Benutzer des Endgerätes getragen wird,
Versetzen (102) des Endgerätes in einen automatischen Antwortmodus, wenn die Distanz zwischen dem Endgerät und der am Körper tragbaren Vorrichtung eine voreingestellte Distanzschwelle überschreitet, und
Steuern (103) eines ersten Anwendungsprogramms, eine voreingestellte Antwortnachricht an einen Absender einer durch das erste Anwendungsprogramm empfangenen Kommunikationsnachricht zu senden, wenn detektiert wird, dass das erste Anwendungsprogramm die Kommunikationsnachricht in dem automatischen Antwortmodus empfängt, **dadurch gekennzeichnet, dass** das Aktivieren eines automatischen Antwortmodus das Endgerät veranlasst, eine Distanzabfrageanforderung an einen Server zu senden, und
der Erfassungsschritt das periodische Empfangen der durch den Server gesendeten Informationen über die Distanzen zwischen dem Endgerät und der am Körper tragbaren Vorrichtung umfasst.

2. Verfahren nach Anspruch 1, **dadurch gekennzeichnet, dass** das Versetzen (102) des Endgerätes in den automatischen Antwortmodus, wenn die Distanz zwischen dem Endgerät und der am Körper tragbaren Vorrichtung die voreingestellte Distanzschwelle überschreitet, umfasst:
Versetzen des Endgerätes in den automatischen Antwortmodus, wenn eine Dauer, in der Distanzen zwischen dem Endgerät und der am Körper tragbaren Vorrichtung kontinuierlich die voreingestellte Distanzschwelle überschreiten, eine voreingestellte Dauer-Schwelle erreicht.

3. Verfahren nach Anspruch 1, **dadurch gekennzeichnet, dass** das Verfahren ferner umfasst:
Bestimmen eines Nutzungsszenarios, das einer zweiten Positionsinformation entspricht, gemäß Positionsinformationen der am Körper tragbaren Vorrichtung innerhalb einer voreingestellten früheren Dauer,
Bestimmen einer zweiten Antwortnachricht, die der zweiten Positionsinformation entspricht, gemäß dem Nutzungsszenario, das der zweiten Positionsinformation entspricht, und
entsprechendes Hinzufügen der zweiten Positionsinformation und der zweiten Antwortnachricht zu der entsprechenden Beziehung zwischen den Positionsinformationen und den Antwortnachrichten.

4. Verfahren nach Anspruch 1, **dadurch gekennzeichnet, dass** das Steuern (103) des ersten Anwendungsprogramms, die voreingestellte Antwortnachricht an den Absender der Kommunikationsnachricht zu senden, wenn detektiert wird, dass das erste Anwendungsprogramm die Kommunikationsnachricht in dem Auto-Antwortmodus empfängt, umfasst:
Bestimmen einer dritten Antwortnachricht, die einer aktuellen Zeit entspricht, gemäß einer zuvor gespeicherten entsprechenden Beziehung zwischen Zeit und Antwortnachrichten, wenn detektiert wird, dass das erste Anwendungsprogramm die Kommunikationsnachricht in dem automatischen Antwortmodus empfängt, und
Steuern des ersten Anwendungsprogramms, die dritte Antwortnachricht an den Absender der Kommunikationsnachricht zu senden.

5. Verfahren nach Anspruch 1, **dadurch gekennzeichnet, dass** das Steuern (103) des ersten Anwendungsprogramms, die voreingestellte Antwortnachricht an den Absender der Kommunikationsnachricht zu senden, wenn detektiert wird, dass das erste Anwendungsprogramm die Kommunikationsnachricht in dem Auto-Antwortmodus empfängt, umfasst:
Bestimmen von aktuellen Ereignisinformationen, die einer aktuellen Zeit entsprechen, gemäß einem in dem Endgerät gespeicherten Kalender, wenn detektiert wird, dass das erste Anwendungsprogramm die Kommunikationsnachricht in dem automatischen Antwortmodus empfängt,
Bestimmen einer vierten Antwortnachricht, die den aktuellen Ereignisinformationen entspricht, gemäß einer zuvor gespeicherten entsprechenden Beziehung zwischen Ereignisinformationen und Antwortnachrichten, und
Steuern des ersten Anwendungsprogramms, die vierte Antwortnachricht an den Absender der Kommunikationsnachricht zu senden.

6. Verfahren nach Anspruch 1, **dadurch gekennzeichnet, dass** das Verfahren ferner umfasst:
Versetzen des Endgerätes in den automatischen Antwortmodus, wenn eine Nachricht empfangen wird, die durch die am Körper tragbare Vorrichtung gesendet wird und anzeigt, dass sich ein Benutzer im Schlafzustand befindet.

7. Endgerät, das befähigt ist, das Verfahren nach einem der Ansprüche 1 bis 6 auszuführen.

8. Computerprogramm, das Instruktionen enthält, um die Schritte eines Verfahrens zur Verarbeitung von Kommunikationsnachrichten nach einem der Ansprüche 1 bis 6 auszuführen, wenn das Programm durch einen Computer ausgeführt wird.

9. Aufzeichnungsmedium, das durch einen Computer gelesen werden kann und auf dem ein Computerprogramm aufgezeichnet ist, das Instruktionen zum Ausführen der Schritte eines Verfahrens zur Verarbeitung von Kommunikationsnachrichten nach einem der Ansprüche 1 bis 6 enthält.

## Revendications

1. Procédé de traitement de message de communication effectué par un programme d'application de gestion d'un terminal (800), comprenant :
l'acquisition (101) d'une distance entre le terminal et un dispositif portable, dans lequel le dispositif portable est porté par l'utilisateur du terminal ;
la commutation (102) du terminal en un mode de réponse automatique lorsque la distance entre le terminal et le dispositif portable dépasse une seuil de distance prédéfini ; et
la commande (103) d'un premier programme d'application pour l'envoi d'un message de réponse prédéfini à un expéditeur d'un message de communication reçu par le premier programme d'application lorsqu'il est détecté que le premier programme d'application reçoit le message de communication en mode de réponse automatique, **caractérisé en ce que** l'activation d'un mode de réponse automatique déclenche le terminal pour l'envoi d'une demande de requête de distance à un serveur ; et
l'étape d'acquisition comprend la réception périodique des informations relatives aux distances entre le terminal et le dispositif portable envoyées par le serveur.

2. Procédé de la revendication 1, **caractérisé en ce que** la commutation (102) du terminal en mode de réponse automatique lorsque la distance entre le terminal et le dispositif portable dépasse le seuil de distance prédéfini comprend :
la commutation du terminal en mode de réponse automatique lorsqu'une durée, pendant laquelle les distances entre le terminal et le dispositif portable dépassent continuellement le seuil de distance prédéfini, atteint un seuil de durée prédéfini.

3. Procédé de la revendication 1, **caractérisé en ce que** le procédé comprend en outre :
la détermination d'un scénario d'utilisation correspondant à des deuxièmes informations de position selon des informations de position du dispositif portable dans une durée historique prédéfinie ;
la détermination d'un deuxième message de réponse correspondant aux deuxièmes informations de position selon le scénario d'utilisation correspondant aux deuxièmes informations de position ; et
l'ajout en conséquence des deuxièmes informations de position et du deuxième message de réponse à la relation correspondante entre les informations de position et les messages de réponse.

4. Procédé de la revendication 1, **caractérisé en ce que** la commande (103) du premier programme d'application pour l'envoi du message de réponse prédéfini à l'expéditeur du message de communication lorsqu'il est détecté que le premier programme d'application reçoit le message de communication en mode de réponse automatique comprend :
la détermination d'un troisième message de réponse correspondant à une heure actuelle selon une relation pré-stockée correspondante entre l'heure et les messages de réponse lorsqu'il est détecté que le premier programme d'application reçoit le message de communication en mode de réponse automatique ; et
la commande du premier programme d'application pour l'envoi du troisième message de réponse à l'expéditeur du message de communication.

5. Procédé de la revendication 1, **caractérisé en ce que** la commande (103) du premier programme d'application pour l'envoi du message de réponse prédéfini à l'expéditeur du message de communication lorsqu'il est détecté que le premier programme d'application reçoit le message de communication en mode de réponse automatique comprend :
la détermination d'informations d'événement actuel correspondant à une heure actuelle selon un calendrier stocké dans le terminal lorsqu'il est détecté que le premier programme d'application reçoit le message de communication en mode de réponse automatique ;
la détermination d'un quatrième message de réponse correspondant aux informations d'événement actuel selon une relation pré-stockée correspondante entre les informations d'événement et les messages de réponse ; et
la commande du premier programme d'application pour l'envoi du quatrième message de réponse à l'expéditeur du message de communication.

6. Procédé de la revendication 1, **caractérisé en ce que** le procédé comprend en outre :
la commutation du terminal en mode de réponse automatique lorsqu'un message, qui est envoyé par le dispositif portable et qui montre qu'un utilisateur est en état de veille, est reçu.

7. Terminal permettant d'exécuter le procédé tel que défini dans l'une des revendications 1 à 6.

8. Programme informatique comportant des instructions pour exécuter les étapes d'un procédé de traitement de message de communication selon l'une quelconque des revendications 1 à 6, lorsque ledit programme est exécuté par un ordinateur.

9. Support d'enregistrement lisible par un ordinateur sur lequel est enregistré un programme informatique comportant des instructions pour exécuter les étapes d'un procédé de traitement de message de communication selon l'une quelconque des revendications 1 à 6.
